# EUROPÄISCHE PATENTANMELDUNG

(11) **EP 2 487 302 A2**
(43) Veröffentlichungstag der Anmeldung: **15.08.2012**
(21) Anmeldenummer: 12154234.4
(22) Anmeldetag: 07.02.2012
(51) Int. Cl.: E03C 1/08

(54) **Anbringung einer Munddusche an dem Wasserauslass aus einer Sanitärarmatur**

(30) Priorität: 09.02.2011 DE 102011003864
(71) Anmelder: Hansgrohe AG, 77761 Schiltach (DE)
(72) Erfinder: Heisterhagen, Jan, 77723 Gengenbach (DE); Butzke, Klaus, 77761 Schiltach (DE)
(74) Vertreter: Patentanwälte Ruff, Wilhelm, Beier, Dauster & Partner

(57) **Zusammenfassung**

Die Erfindung schlägt einen Einsatz vor, der in den Wasserauslass einer Sanitärarmatur direkt oder mithilfe eines Adapters eingeschraubt werden kann. Dieser Einsatz enthält eine von einem Einlass zu einem Auslass führende Wasserführung mit einem Umschaltventil (16). Zusätzlich enthält der Einsatz einen Steckanschluss für einen Anschlussnippel (20) beispielsweise einer Munddusche. Das Umschaltventil (16) ist so ausgebildet, dass es dann, wenn der Anschlussnippel (20) in den Steckanschluss eingeschoben wird, den Steckanschluss und damit den Anschlussnippel mit Wasser versorgt, während der übrige Wasserauslass aus dem Einsatz verschlossen wird.

## Beschreibung

Die Erfindung betrifft die Anbringung einer Munddusche an dem Wasserauslass aus einer Sanitärarmatur.

Mundduschen als Zubehörteile für Sanitärarmaturen und Sanitärarmaturen, an denen man eine Munddusche anschließen kann, sind seit langem bekannt. Solche Sanitärarmaturen haben einen Anschluss, beispielsweise einen Steckanschluss, für einen Anschlussnippel einer Munddusche. Dieser Anschluss ist dann häufig an einer Stelle angeordnet, wo er optisch nicht zu sehr stört.

Es ist bereits ein Schnellanschluss für eine Munddusche bekannt, der als Einsatz ausgebildet ist, der in den Auslass einer Sanitärarmatur eingeschraubt wird. Der Einsatz hat einen einzigen Wasserauslass, in den der Nippel eines zu einer Munddusche führenden Schlauchs eingesteckt werden kann (DE 20214901 U1).

Weiterhin bekannt ist ein Vorsatzelement zum Anschluss einer Munddusche. Dieses Vorsatzelement kann an das Außengewinde eines Wasserhahns angeschraubt werden. Es enthält einen Steckanschluss für den Anschlussnippel einer Munddusche. Wenn der Anschlussnippel der Munddusche eingesteckt ist, kann ein Teil des Vorsatzelements verdreht werden, um dadurch das Wasser zu der Munddusche zu leiten. Es sind also zwei Vorgänge erforderlich, um die Munddusche in Betrieb zu nehmen. Wenn man berücksichtigt, dass dies häufig mit nassen Händen getan wird, kann sich die Handhabung als erschwert herausstellen (DE 2634721 A1).

Der Erfindung liegt die Aufgabe zu Grunde, einen nachrüstbaren Anschluss an einer Sanitärarmatur, beispielsweise für eine Munddusche, zu schaffen, der sich einfacher bedienen lässt.

Zur Lösung dieser Aufgabe schlägt die Erfindung einen Einsatz für den Wasserauslass aus einer Sanitärarmatur mit den im Anspruch 1 genannten Merkmalen vor. Weiterbildungen der Erfindung sind Gegenstand von Unteransprüchen.

Der Einsatz, den die Erfindung vorschlägt, lässt sich in einer Sanitärarmatur oder an einer Sanitärarmatur anbringen. Durch Einstecken des Nippels wird das in diesem Einsatz vorhandene Umschaltventil betätigt, so dass nach dem Einstecken des Nippels dieser mit Wasser versorgt werden kann, sobald aus der Sanitärarmatur Wasser ausströmt.

Es ist kein zweiter Vorgang erforderlich, um das an den Nippel angeschlossene Gerät in Betrieb zu setzen. Nach Benutzung dieses Geräts wird der Nippel wieder abgezogen. Dadurch schaltet sich das Ventil wieder zurück.

Der Nippel soll nur dann mit Wasser versorgt werden, wenn dies erforderlich ist. Es handelt sich also um einen zusätzlichen Wasserauslass. Der eigentliche Wasserauslass ist von diesem zusätzlichen Wasserauslass getrennt. Erfindungsgemäß kann nun vorgesehen sein, dass beim Einschalten der Wasserströmung durch den Nippel der normale Wasserauslass weiterhin mit Wasser versorgt wird. Dann würde das in dem Einsatz vorhandene Umschaltventil zwischen der Versorgung zweier Wasserauslässe und der Versorgung eines Wasserauslasses umschalten.

Es ist aber ebenfalls möglich und wird von der Erfindung vorgeschlagen, dass das Umschaltventil derart ausgebildet ist, das es bei seiner Betätigung durch das Einstecken des Nippels in den Steckanschluss die Wasserversorgung zu dem eigentlichen Wasserauslass abschaltet. Damit wird dann erreicht, dass das Wasser nur durch den Steckanschluss und damit durch den Nippel fließt.

Erfindungsgemäß kann in Weiterbildung vorgesehen sein, dass der Wasserauslass aus dem Einsatzgehäuse einen Strahlregler aufweist.

Es hat sich als besonders sinnvoll herausgestellt, den Steckanschluss in der Mitte des Wasserauslasses anzuordnen, so dass er allseits von dem normalen Wasserauslass, insbesondere dem Strahlregler umgeben ist. Der Steckanschluss ordnet sich dann optisch in das allgemeine Aussehen des Wasserauslasses, insbesondere des Strahlreglers, ein und bildet dadurch keinen Fremdkörper.

Es wurde bereits erwähnt, dass ein solcher Steckanschluss oder Schnellanschluss insbesondere für eine Munddusche geeignet ist. Daher kann erfindungsgemäß vorgesehen sein, dass der Nippel der Anschlussnippel einer Munddusche oder eines zu einer Munddusche führenden Schlauchs ist.

In nochmaliger Weiterbildung der Erfindung kann vorgesehen sein, dass der Ventilschließkörper des Umschaltventils in dem Einsatzgehäuse linear verschiebbar angeordnet ist, insbesondere axial verschiebbar, vorzugsweise in Steckrichtung des Steckanschlusses bzw. des Nippels. Es braucht auf diese Weise keine Umlenkung der Bewegung durchgeführt zu werden, so dass das Umschaltventil auch besonders einfach ausgebildet sein kann.

Zur Verrastung des Nippels in dem Steckanschluss kann dieser eine Sperreinrichtung, eine Sperrklinke, eine Rastung oder dergleichen aufweisen. Unter Umständen kann auch eine enge Passung oder eine entsprechende Dichtung zu einer kraftschlüssigen Festlegung ausgenutzt werden.

Erfindungsgemäß kann in Weiterbildung vorgesehen sein, dass der Nippel mit seinem führenden Ende direkt auf den Ventilschließkörper einwirkt und diesen verschiebt.

Erfindungsgemäß kann zur Anpassung des Einsatzgehäuses an unterschiedliche Sanitärarmaturen ein Adapterelement vorgesehen sein, in das der Einsatz eingesetzt wird und das seinerseits dann mit dem Gehäuse der Sanitärarmatur verbunden wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen:
- Figur 1: einen Axialschnitt durch einen von der Erfindung vorgeschlagenen Einsatz;
- Figur 2: den gleichen Schnitt mit eingesetztem Nippel;
- Figur 3: eine Stirnansicht des Einsatzes in Figur 1;
- Figur 4: eine perspektivische Darstellung des Einsatzes;
- Figur 5: einen der Figur 1 entsprechenden Schnitt des Einsatzes in einem Adapter;
- Figur 6: den der Figur 2 entsprechenden Schnitt durch den Einsatz der Figur 5;
- Figur 7: die perspektivische Ansicht des Einsatzes mit Adapter.

Der in den Figuren dargestellte von der Erfindung vorgeschlagene Einsatz enthält ein äußeres Ringelement 1 mit einer zylindrischen Außenseite 2 und einer offenen in einer Ebene liegenden Vorderseite 3. Auf der der offenen Vorderseite 3 abgewandten Rückseite ist eine Stufe gebildet, und jenseits der Stufe enthält das Ringelement 1 ein Außengewinde. Mithilfe dieses Außengewindes kann das Ringelement 1 in einer Auslassöffnung einer Sanitärarmatur eingeschraubt werden. Innerhalb des Ringelements ist ein Strahlregler 5 eingesetzt, der dort festgelegt ist. Der Strahlregler enthält in seiner Mitte ein axiales Rohr 6, das einen Steckanschluss bildet. Auf der Rückseite des Strahlreglers 5 ist eine Dichtung 7 aufgelegt. In diese Anordnung ist dann eine Außenhülse 8 eingesteckt, die an dieser Stelle nur durch Stecken befestigt ist. Der Zusammenhalt des gesamten Einsatzes geschieht dadurch, dass er in eine Armatur oder einen Adapter eingeschraubt wird. Innerhalb der Außenhülse 8 ist eine Innenhülse 9 abgedichtet eingesetzt, die einen Boden 10 aufweist. Der Boden 10 enthält einen axialen mittigen Durchlass 11 und einen außermittig angeordneten Durchlass 12. Die Innenhülse 9 weist die gleiche axiale Erstreckung auf wie die Außenhülse 8. Zwischen der Innenhülse 9 und der Außenhülse 8 ist ein ringförmiger Zwischenraum 13 gebildet, der in den Strahlregler 5 führt.

Die Innenhülse weist in einer Querebene eine Vielzahl von durch ihre Wand radial hindurch führenden Durchgängen 14 auf. Dadurch wird eine Flüssigkeitsverbindung zwischen dem Inneren der Innenhülse und dem Zwischenraum 13 hergestellt.

Unmittelbar am Ende der Durchmesser 11 und 12 ist innerhalb der Innenhülse 9 ein verbreiterter Vorraum 15 gebildet. Daran anschließend verringert sich der Innendurchmesser etwas und es ist ein zylindrischer Raum gebildet. In diesem zylindrischen Raum ist ein Ventilschließkörper 16 axial verschiebbar geführt. Der Ventilschließkörper 16 weist ebenfalls die Form einer Hülse mit einem Boden auf. An der Außenseite des Bodens ist ein zylindrischer Führungsansatz 17 ausgebildet. Der Außendurchmesser des Führungsansatzes 17 entspricht dem Innendurchmesser des Durchlasses 11 im Boden 10 der Innenhülse 9. Auch der Ventilschließkörper 16 weist in seiner Wand 18 in einer Ebene eine Vielzahl von radialen Durchlassöffnungen 19 auf.

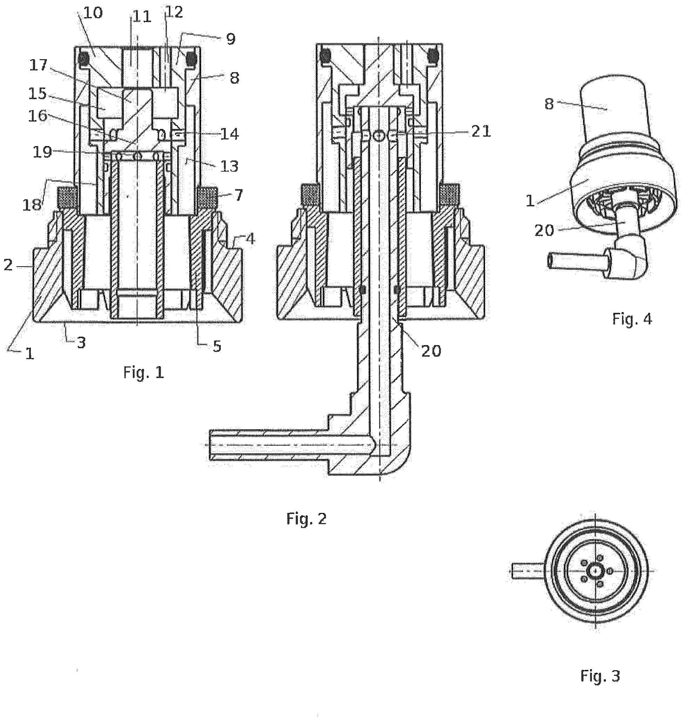

Die Figur 1 zeigt die Situation, in der der durch das Rohr 6 gebildete Steckanschluss frei ist. Der Ventilschließkörper 16 nimmt eine durch den Wasserdruck hergestellte oder durch eine Druckfeder bewirkte Position ein, in der die Durchlassöffnungen 19 in seiner Wand durch die Innenhülse 9 verschlossen sind. Andererseits sind die Durchlassöffnungen 14 in der Wand der Innenhülse 9 offen, so dass das Wasser von oben in Figur 1 mindestens durch den Durchlass 12 in den Vorraum 15 und von dort durch die Öffnungen 14 in den Zwischenraum 13 fließen kann. Aus dem Zwischenraum 13 fließt das Wasser durch den Strahlregler 5 hindurch und aus der Vorderseite des Einsatzes heraus.

Wird nun ein Nippel 20 in den durch das Rohr 6 gebildeten Steckanschluss eingeschoben, wobei immer vorausgesetzt ist, dass der Außendurchmesser des Nippels 20 dem Innendurchmesser des Rohrs 6 entspricht, so gelangt die Stirnfläche des Nippels 20 auf der Innenseite des Bodens des Ventilschließkörpers 16 zur Anlage. Der Ventilschließkörper 16 wird von dem Nippel 20 weg geschoben, wobei sein Ansatz 17 in dem Durchlass 11 geführt ist. Der Ventilschließkörper 16 wird soweit verschoben, bis eine Stufe an der Außenseite seines Bodens zur Anlage an der Wand des Bodens 10 der Innenhülse 9 gelangt. Damit ist seine Verschiebung begrenzt. In dieser Position, siehe Figur 2, liegen die Durchlassöffnungen 19 des Ventilschließkörpers 16 innerhalb des Vorraums 15. Sie sind an ihrer radialen Außenseite offen, so dass das Wasser aus dem Durchlass 12 und dem Vorraum 15 durch die Durchlassöffnungen 19 in das Innere des Ventilschließkörpers 16 fließen kann. Aus dem Inneren des Ventilschließkörpers kann das Wasser durch in der Wand des Nippels 20 vorhandene Öffnungen 21 in das Innere des Nippels 20 von dort durch den Nippel selbst hindurch fließen.

Die gerade durchgeführte Beschreibung gilt natürlich nur, wenn der Einsatz in einer Sanitärarmatur angeordnet ist und das zugehörige Ventil geöffnet ist.

Die Figur 3 zeigt eine Stirnansicht des Einsatzes von unten in Figur 1. Es ist hier zu sehen, dass der Strahlregler 5 Öffnungen aufweist, und dass zentral die Mündung des Rohrs 6 vorhanden ist. Aufgrund der symmetrischen Anordnung gliedert sich der Steckanschluss 6 optisch in die Anordnung der Öffnungen des Strahlreglers und des ebenfalls kreisförmigen Ringelements 1.

Die Figur 4 zeigt die perspektivische Anordnung dieses Einsatzes mit dem Ringelement 1 und der im Durchmesser verringerten Außenhülse 8.

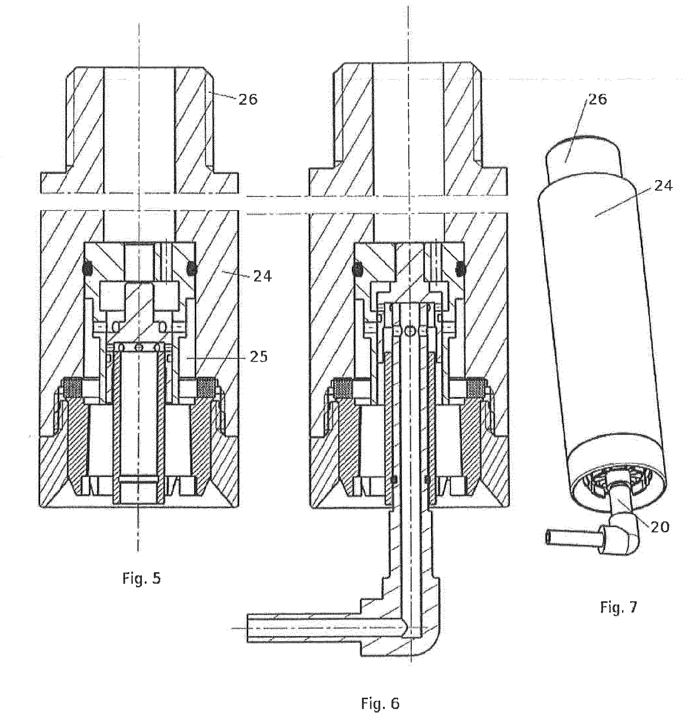

Der Schnitt der Figur 5 zeigt, wie der Einsatz, der in Figur 1 allein dargestellt ist, in ein Adapterelement 24 eingeschraubt ist. Hier ist auch zu sehen, wie die Kombination aus den beiden Hülsen 8, 9 in einer Öffnung 25 des Adapterelements 24 eingesetzt und damit zusammengehalten ist. Das Adapterelement 24 weist auf seiner Rückseite ein Außengewinde 26 auf, mit dem es in ein Armaturengehäuse eingeschraubt werden kann. Im übrigen ist der in dem Adaptergehäuse 24 vorhandene Einsatz identisch zu der Ausbildung in Figur 1 und 2.

Das Ringelement 1, die beiden Hülsen 8, 9 und der Strahlregler 5 bilden das Einsatzgehäuse.

## Patentansprüche

1. Einsatz für den Wasserauslass aus einer Sanitärarmatur, mit
1.1 einem Einsatzgehäuse,
1.2 einem Wassereinlass in das Gehäuse,
1.3 einem Wasserauslass aus dem Gehäuse,
1.4 einem Umschaltventil in dem Gehäuse,
1.5 einem Steckanschluss für einen Nippel (20), der
1.6 zusätzlich zu dem Wasserauslass aus dem Gehäuse vorgesehen ist, wobei
1.7 das Umschaltventil durch das Einstecken des Nippels (20) betätigbar ist und
1.8 bei eingestecktem Nippel (20) den Nippel (20) mit Wasser versorgt.

2. Einsatz nach Anspruch 1, bei dem das Umschaltventil derart ausgebildet ist, dass es beim Betätigen den Wasserauslass aus dem Einsatzgehäuse verschließt.

3. Einsatz nach Anspruch 1 oder 2, bei dem der Wasserauslass aus dem Einsatzgehäuse einen Strahlregler (5) aufweist.

4. Einsatz nach einem der vorhergehenden Ansprüche, bei dem der Steckanschluss in der Mitte des Wasserauslasses angeordnet ist.

5. Einsatz nach einem der vorhergehenden Ansprüche, bei dem der Nippel (20) der Anschlussnippel einer Munddusche ist.

6. Einsatz nach einem der vorhergehenden Ansprüche, bei dem ein Ventilschließkörper (16) des Umschaltventils in dem Einsatzgehäuse linear verschiebbar ist, vorzugsweise in Steckrichtung des Steckanschlusses.

7. Einsatz nach einem der vorhergehenden Ansprüche, bei dem der Steckanschluss eine Sperrklinke, eine Rastung oder dergleichen aufweist.

8. Einsatz nach einem der vorhergehenden Ansprüche, mit einer Einrichtung zu seiner Festlegung in dem Wasserauslass aus der Sanitärarmatur.
